# EUROPEAN PATENT APPLICATION

(11) **EP 1 172 988 A2**
(43) Date of publication of application: **16.01.2002**
(21) Application number: 01305698.1
(22) Date of filing: 29.06.2001
(51) Int. Cl.: H04L 29/06

(54) **Server computer and method for sending a virtual character associated with a service provided, and computer readable recording medium that records a program for implementing the method**

(30) Priority: 14.07.2000 JP 2000214447
(71) Applicant: SHARP KABUSHIKI KAISHA, Osaka 545-8522 (JP)
(72) Inventor: Yokogawa, Kazuyuki, Osaka-shi, Osaka (JP)
(74) Representative: Brown, Kenneth Richard

(57) **Abstract**

A virtual character sending method for sending, from a server computer to a client computer, a virtual character whose figure is changed based on services having been provided from the server computer to the client computer. The method includes the step (S4) of updating the virtual character to be sent to the user based on points accumulated according to the services provided, the step (S6) of sending data representing the updated virtual character to the user, and the step (S10) of providing a service requested from the user and adding up the points corresponding to the service provided.

## Description

Server Computer and Method for Sending Virtual Character Associated with Service Provided, and Computer Readable Recording Medium That Records Program for Implementing the Method

### BACKGROUND OF THE INVENTION

### Field of the Invention

The present invention relates to a technique to provide a service in a server-client system, and more particularly, to a technique for a server computer to provide a client computer with a virtual character associated with the service provided.

### Description of the Background Art

A game for raising or breeding an electronic pet using portable electronic equipment is known. A user is able to permit the electronic pet that he/she raised in the portable electronic equipment to participate in an event that is implemented by computers on a network. Japanese Patent Laying-Open No. 11-192384 discloses such an electronic pet simulation technique utilizing the network.

The simulation system disclosed therein includes a workstation connected to the network, a terminal device connected to the network, and the portable electronic equipment connected to the terminal device. The portable electronic equipment includes a breeding unit in which the electronic pet is raised, and a circuit for sending data associated with the pet having been raised to the terminal device. The terminal device includes a circuit for receiving the data associated with the pet, and an access unit for accessing the workstation. The access unit includes a circuit for transmitting the data associated with the electronic pet to the workstation, and a circuit for requesting participation of the pet raised in the portable electronic equipment in an event being implemented by computers on the network. The workstation includes a storage unit for storing a program for execution of the event and data representing a plurality of electronic pets that will participate in the event. Each electronic pet participating in the event is related to the electronic pet raised in the portable electronic equipment. The workstation further includes a determination unit that determines, based on the data associated with the electronic pet transmitted from the terminal device, a corresponding electronic pet from the plurality of electronic pets, and a participation unit that responds to a request for participation by reading out the determined electronic pet from the storage unit and making it participate in the event.

According to this system, the user is able to cause the electronic pet that the user has raised using the portable electronic equipment of his/her own to participate in a virtual event being implemented on the network.

The portable electronic equipment being used in the system, however, requires a capability to connect to the terminal device. Further, the user is required to breed the electronic pet actively or energetically using the portable electronic equipment.

### SUMMARY OF THE INVENTION

An object of the present invention is to provide a server computer that can send to a client computer a virtual character that is changed in figure according to a history of services provided from the server computer to the client computer, and a method for sending such a virtual character.

Another object of the present invention is to provide a server computer that can send a virtual character to any kind of client computer, and a method for sending such a virtual character.

A further object of the present invention is to provide a server computer that can analyze preference of a user based on a history of services having been provided from the server computer to the client computer, and a method for analyzing the preference information of the user.

A still further object of the present invention is to provide a server computer that can send to a client computer a virtual character congenial to a user's preference, and a method for sending such a virtual character.

Yet another object of the present invention is to provide a server computer in which a virtual character can present a user with a questionnaire congenial to the user's preference, and a method for sending such a virtual character.

A further object of the present invention is to provide a server computer in which a virtual character can present a user with advertisement information congenial to the user's preference, and a method for sending such a virtual character.

According to an aspect of the present invention, a server computer sends a virtual character to a client computer through a network. The server computer includes: a communication circuit that is connected to the network for communicating with the client computer; an identification circuit that is connected to the communication circuit for identifying a user using the client computer based on data received from the client computer; a providing circuit that is connected to the communication circuit for providing a service to the user according to a request from the user; a history storage circuit that is connected to the providing circuit for storing a history of services provided to the user; a storage circuit for storing data representing the virtual character changeable in figure; and a sending circuit that is connected to the communication circuit, the identification circuit, the history storage circuit and the storage circuit, for sending the data representing the virtual character having its figure changed based on the history of services provided to the user identified by the identification circuit, to the client computer that is used by the identified user.

The providing circuit provides the user with a service according to a request from the user. The history storage circuit stores the history of services provided to the user by the providing circuit. The sending circuit sends to the client computer used by the user, the data representing the virtual character having its figure changed based on the stored history of services provided. Thus, the server computer is able to send the virtual character having its figure changed based on the history of the services provided to the user. If the virtual character has been created based on a real animal, as the number of the services provided to the user increases, the virtual character with its figure representing a corresponding grown state of the animal is transmitted to the client computer.

More preferably, the server computer further includes a determining circuit that is connected to the communication circuit for determining a data format with which the client computer is able to output. The sending circuit includes a circuit for transforming the data representing the virtual character having its figure changed, to the data format determined by the determining circuit, and sending the transformed data to the client computer.

The sending circuit can send the data representing the virtual character that has been transformed to the data format determined by the determining circuit. Thus, the virtual character can be sent to any client computer, regardless of which kind of data format the client computer can output with.

Still preferably, the providing circuit includes a circuit for providing information to the user according to the user request. The history storage circuit includes a circuit for storing the history of services provided to the user by classifying the services within the history into categories. The server computer further includes a preference information storage circuit that is connected to the history storage circuit for generating and storing preference information of the user based on that history with the services classified into the categories.

The server computer is able to classify the services within the history of services provided to the user into categories, and generate the information representing the preference of the user based on that history with the services classified into the categories.

Still preferably, the storage circuit includes a circuit for storing data including a plurality of virtual characters changeable in figures. The server computer further includes a character select circuit that is connected to the preference information storage circuit and the storage circuit, for selecting one of the plurality of virtual characters based on the preference of the user. The sending circuit includes a circuit for sending the data representing the virtual character that has been selected by the character select circuit and that has its figure changed based on the history of services provided to the user identified by the identification circuit, to the client computer used by the identified user.

The server computer is able to select, based on the preference of the user, a virtual character congenial to the user's preference from a plurality of virtual characters, and to send such a virtual character congenial to the user's preference.

Still preferably, the server computer further includes a motion data storage circuit for storing data for implementing a motion of the virtual character in the client computer, in which the motion includes a motion of the virtual character to present the user with a questionnaire in the client computer. An answer to the questionnaire input by the user is sent to the server computer. The server computer further includes a user select circuit that is connected to the preference information storage circuit for selecting a user based on the preference information stored in the preference information storage circuit and the content of the questionnaire. The sending circuit includes a circuit for sending, when the user selected by the user select circuit is the user identified by the identification circuit, the data representing the virtual character having its figure changed and the data for implementing the motion that is stored in the motion data storage circuit, to the client computer used by the selected user.

The server computer is able to send the virtual character that makes a motion to display to the user a questionnaire congenial to the user's preference and a motion to send an answer to the questionnaire back to the server computer.

Still preferably, the server computer further includes a motion data storage circuit for storing data for implementing a motion of the virtual character in the client computer, in which the motion includes a motion of the virtual character to prompt the user to access advertisement information. The server computer further includes a user select circuit that is connected to the preference information storage circuit for selecting a user based on the preference information stored in the preference information storage circuit and the content of the advertisement information. The sending circuit includes a circuit for sending, when the user selected by the user select circuit is the user identified by the identification circuit, the data representing the virtual character having its figure changed and the data for implementing the motion that is stored in the motion data storage circuit, to the client computer used by the selected user.

The server computer is thus able to send the virtual character that makes a motion to prompt the user to access the advertisement information congenial to the user's preference.

According to another aspect of the present invention, a virtual character sending method in a server computer for sending a virtual character to a client computer through a network is provided. The virtual character sending method includes the steps of: identifying a user using the client computer based on data received from the client computer; providing a service to the user according to a request from the user; storing a history of services provided to the user; preparing data representing the virtual character changeable in figure; and sending the data representing the virtual character having its figure changed based on the history of services provided to the user identified in the step of identifying the user, to the client computer used by the identified user.

In the step of providing the service, the service is provided to the user according to the user request. In the step of storing the history of services, the history of the services having been provided to the user is stored. In the step of sending the virtual character, the data representing the virtual character having its figure changed based on the stored history of services is sent to the client computer used by the user. Thus, the virtual character sending method of the present invention is able to send the virtual character having its figure changed based on the history of the services provided to the user.

According to yet another aspect of the present invention, a computer readable recording medium that records a program for implementation of a sending method in a server computer for sending a virtual character to a client computer through a network is provided. The virtual character sending method includes the steps of: identifying a user using the client computer based on data received from the client computer; providing a service to the user according to a request from the user; storing a history of services provided to the user; preparing data representing the virtual character changeable in figure; and sending the data representing the virtual character having its figure changed based on the history of services provided to the user identified in the step of identifying the user, to the client computer used by the identified user.

In the step of providing the service, the service is provided to the user according to the user request. In the step of storing the history of services, the history of the services having been provided to the user is stored. In the step of sending the virtual character, the data representing the virtual character having its figure changed based on the stored history of services is sent to the client computer used by the user. The recording medium of the present invention is able to provide a program for implementation of the virtual character sending method for sending the virtual character having its figure changed based on the history of the services provided to the user.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 shows an entire server-client system including a server computer according to a first embodiment of the present invention.

Fig. 2 is a control block diagram of the server computer of the first embodiment.

Fig. 3 shows in detail a control unit of the server computer.

Fig. 4 shows in detail a storage unit of the server computer.

Fig. 5 shows data being stored in a user ID storage unit.

Fig. 6 shows data being stored in a user provided history storage unit.

Fig. 7 shows data being stored in a service-for-provision storage unit.

Fig. 8 shows data being stored in a virtual character storage unit.

Fig. 9 shows data being stored in a user virtual character storage unit.

Fig. 10 shows an appearance of a computer implementing the server computer according to the first embodiment.

Fig. 11 is a control block diagram of the computer implementing the server computer of the first embodiment.

Fig. 12 is a flow chart illustrating the control procedure of an entire process according to the first embodiment.

Fig. 13 is a flow chart illustrating the control procedure of a login process of the first embodiment.

Fig. 14 is a flow chart illustrating the control procedure of an update flag process of the first embodiment.

Fig. 15 is a flow chart illustrating the control procedure of a virtual character updating process of the first embodiment.

Fig. 16 is a flow chart illustrating the control procedure of a service providing process of the first embodiment.

Fig. 17 is a flow chart illustrating the control procedure of a questionnaire process of the first embodiment.

Fig. 18 is a flow chart illustrating the control procedure of an advertisement process of the first embodiment.

Figs. 19-23 illustrate examples of image screens at a portal site according to the first embodiment.

Fig. 24 shows a communication interface connecting a server computer and a terminal device according to a second embodiment of the present invention.

Fig. 25 is a flow chart illustrating the control procedure of the login process and the virtual character sending process according to the second embodiment.

Fig. 26 shows a display example at a portal site being displayed on a portable telephone in the second embodiment.

### DESCRIPTION OF THE PREFERRED EMBODIMENTS

Hereinafter, embodiments of the present invention will be described with reference to the drawings, through which the same elements are denoted by the same reference characters, and they have the same names and same functions. Thus, detailed description thereof will not be repeated where appropriate.

### First Embodiment

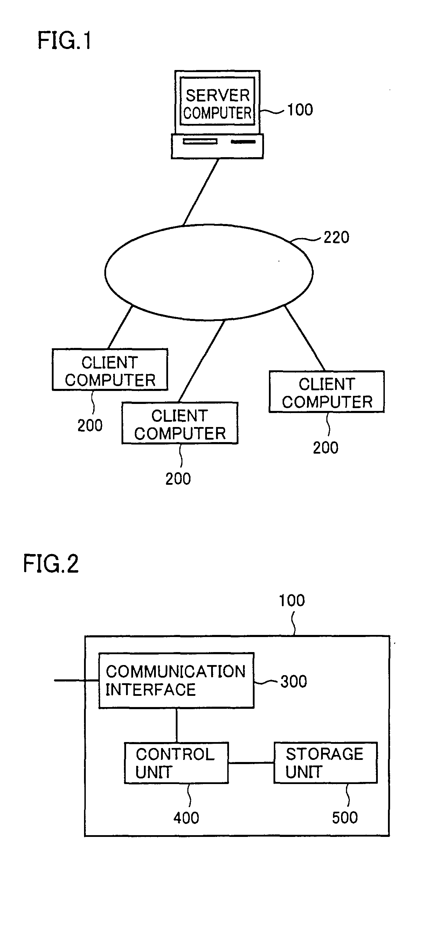

Referring to Fig. 1, a server computer 100 of the present embodiment is connected to a plurality of client computers 200 through a network 220. A user uses client computer 200 to access server computer 100.

Referring to Fig. 2, server computer 100 includes: a communication interface 300 that is connected to network 220 for communicating with client computer 200; a control unit 400 that is connected to communication interface 300 for delivering, e.g., music data according to a user request received from client computer 200, or updating a virtual character based on a history of services provided to the user; and a storage unit 500 that is connected to control unit 400 for storing a user ID (identification) for identification of the user accessing server computer 100, and storing information being provided.

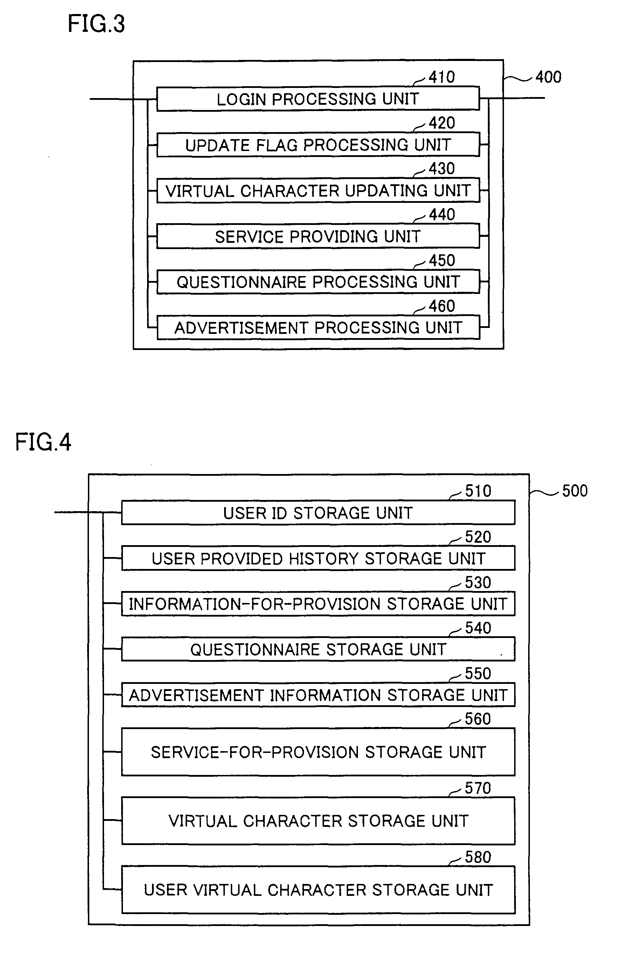

Referring to Fig. 3, control unit 400 shown in Fig. 2 includes: a login processing unit 410 that performs a login process upon reception of a login request from client computer 200; an update flag processing unit 420 that sets a character update flag when a new service is provided after the history of services provided has been analyzed; a virtual character updating unit 430 that updates the virtual character when a user whose update flag has been set logs in; a service providing unit 440 that provides a service corresponding to a request from the user; a questionnaire processing unit 450 that sends a questionnaire to the user when a prescribed condition is satisfied; and an advertisement processing unit 460 that sends advertisement information to the user.

Referring to Fig. 4, storage unit 500 shown in Fig. 2 includes: a user ID storage unit 510 that stores a user password and the like; a user provided history storage unit 520 that stores services provided to the user; an information-for-provision storage unit 530 that stores information being provided to the user according to a request from the user; a questionnaire storage unit 540 that stores questionnaires being sent to the user; an advertisement information storage unit 550 that stores advertisement information being sent to the user; a service-for-provision storage unit 560 that stores a category and points of each service being provided to the user; a virtual character storage unit 570 that stores virtual characters according to respective categories and points; and a user virtual character storage unit 580 that stores, for each user, a virtual character selected based on the history of the services provided to the user.

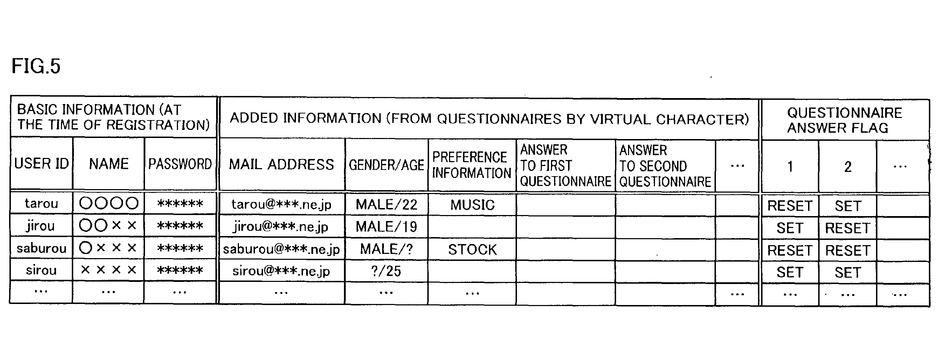

Referring to Fig. 5, the information stored in user ID storage unit 510 includes basic information, added information and questionnaire answer flags. The basic information is the information that is necessary for the login process, which includes user ID, name and password of the user. The added information is the information that is stored based on a result of questionnaires made by the virtual character. The added information includes, for example, mail address, gender, age, preference information, the content of an answer to the first questionnaire, the content of an answer to the second questionnaire, and others. If there is no answer to a specific questionnaire (e.g., if the user did not answer the questionnaire asking his/her age), the information about the questionnaire (the age in this case) is not stored. The questionnaire answer flag is stored for each questionnaire, and is set when the relevant questionnaire is answered.

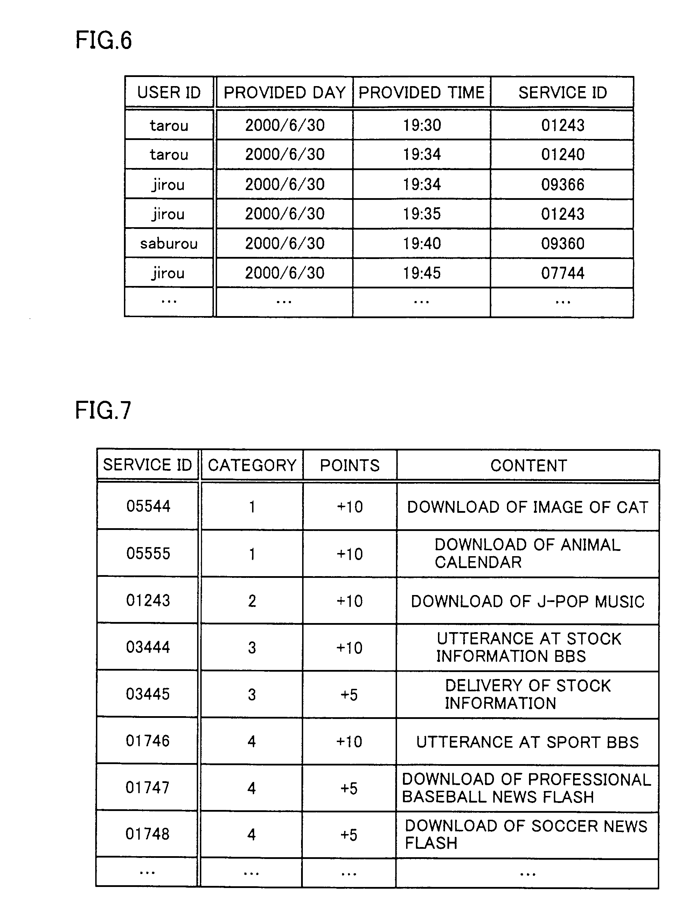

Referring to Fig. 6, the information stored in user provided history storage unit 520 includes a user ID for identification of the user to whom the service was provided, a day and a time when the service was provided, and a service ID for identification of the service provided.

Referring to Fig. 7, the information stored in service-for-provision storage unit 560 includes, for each service ID, a category in which the service is included, the points for the service, and the content of the service. Specifically, category "1" represents "animal", and category "4" represents "sport". The category and the points of the service provided to the user are determined by the service ID.

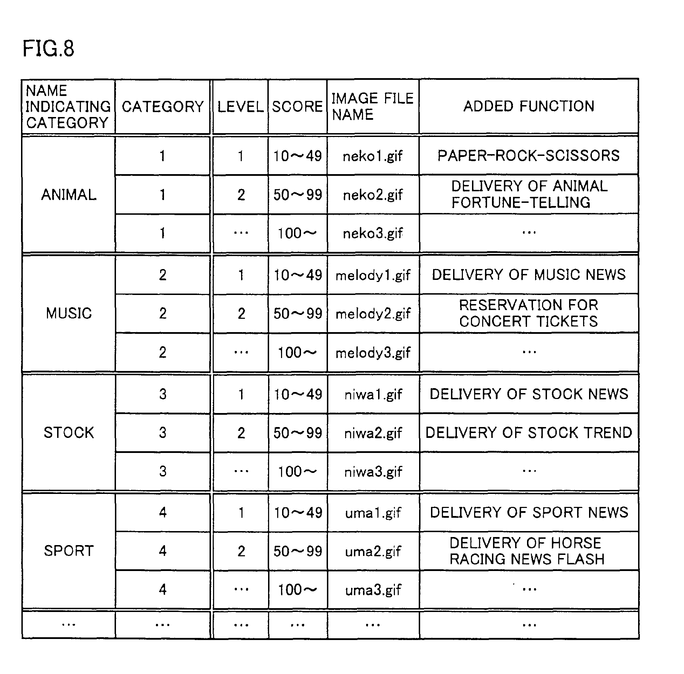

Referring to Fig. 8, the information stored in virtual character storage unit 570 includes, for each category and level, an image file name of the virtual character and an added function of the relevant virtual character. The level is determined based on a score obtained by accumulating the points shown in Fig. 7. The image file shown in Fig. 8 and the data for implementing the added function at client computer 200 are stored in virtual character storage unit 570. The data stored in respective image files "neko1.gif", "neko2.gif", and "neko3.gif" represent the same virtual character having their figures different from each other.

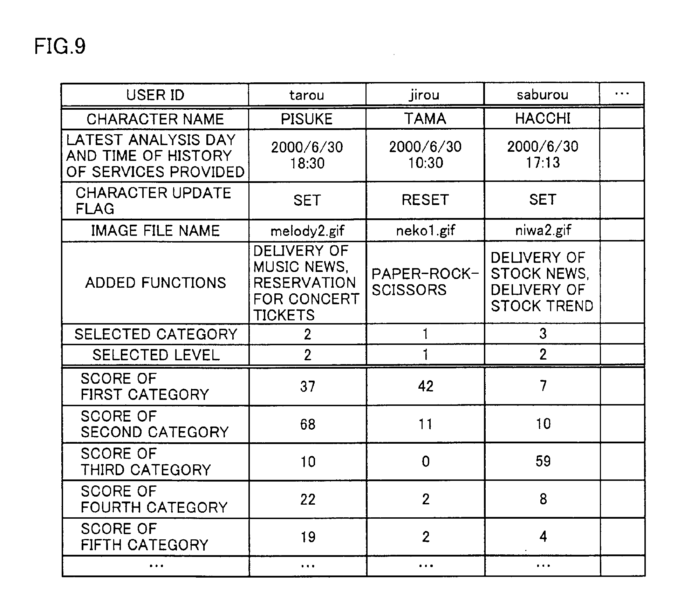

Referring to Fig. 9, the information stored in user virtual character storage unit 580 includes, for each user, a character name the user has given to the virtual character, day and time of the latest analysis of the history of services provided to the user, a character update flag, an image file name, added functions provided to the virtual character, a selected category, a selected level, and scores for respective categories. For example, for the user identified by the user ID "tarou", a virtual character of the second category, second level is selected. The functions added to the virtual character include those for delivery of music news and reservation for concert tickets.

The category and the level are selected as follows. A category whose score obtained by accumulating the points is highest among the plurality of categories is selected, and the level is selected according to the score of the selected category. The level selection is made according to a range of the scores prescribed for each level as shown in Fig. 8.

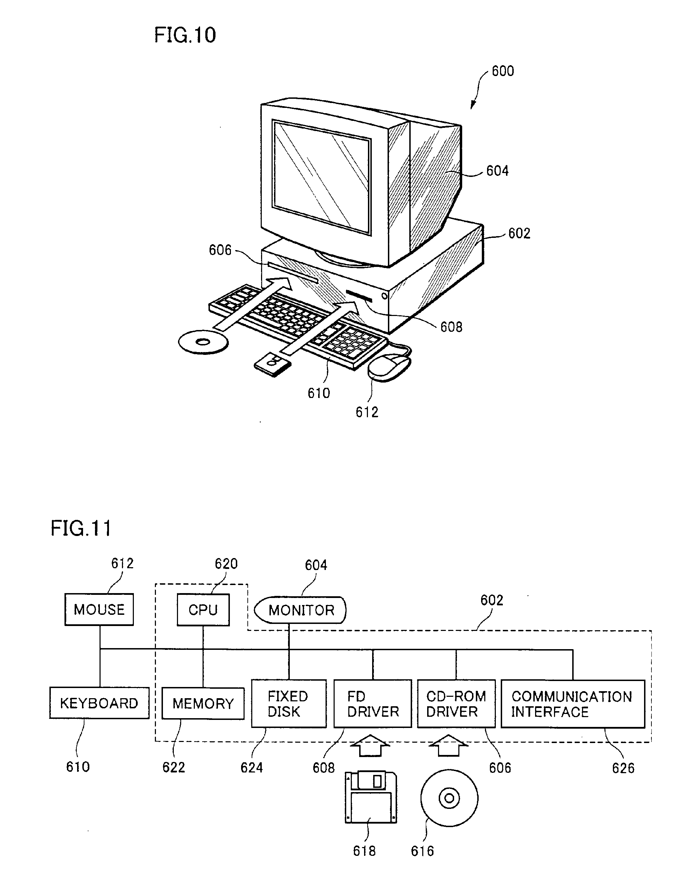

In practice, server computer 100 is implemented by software running on a computer such as a personal computer or a workstation. Fig. 10 shows an appearance of a computer system as an example of server computer 100. Referring to Fig. 10, this computer system 600 includes a computer 602 provided with an FD (flexible disk) driver 608 and a CD-ROM (compact disc-read only memory) driver 606, a monitor 604, a keyboard 610 and a mouse 612.

Fig. 11 shows the configuration of computer system 600 in a block diagram. As shown in Fig. 11, computer 602 includes, besides FD driver 608 and CD-ROM driver 606, a CPU (central processing unit) 620, a memory 622, a fixed disk 624 and a communication interface 626, which are all connected to each other through a bus. An FD 618 is set to FD driver 608, and a CD-ROM 616 is set to CD-ROM driver 606.

Server computer 100 is implemented by such computer hardware and software running on CPU 620. In general, such software is available as being stored in a recording medium like FD 618 or CD-ROM 616, which is read from the recording medium using FD driver 608 or CD-ROM driver 606 and stored in fixed disk 624. It is further read from fixed disk 624 to memory 622, and executed by CPU 620. The hardware itself of the computer system shown in Figs. 10 and 11 is well known. Thus, the most essential feature of the present invention is the software recorded on a recording medium such as FD 618, CD-ROM 616 or fixed disk 624.

Communication interface 300 and storage unit 500 in Fig. 2 correspond to communication interface 626 and fixed disk 624 in Fig. 11, respectively. The functions of control unit 400 in Fig. 2 are implemented by the software executed by CPU 620 in Fig. 11.

Otherwise, the operations of the computer system itself shown in Figs. 10 and 11 are well known, so that detailed description thereof is not provided here.

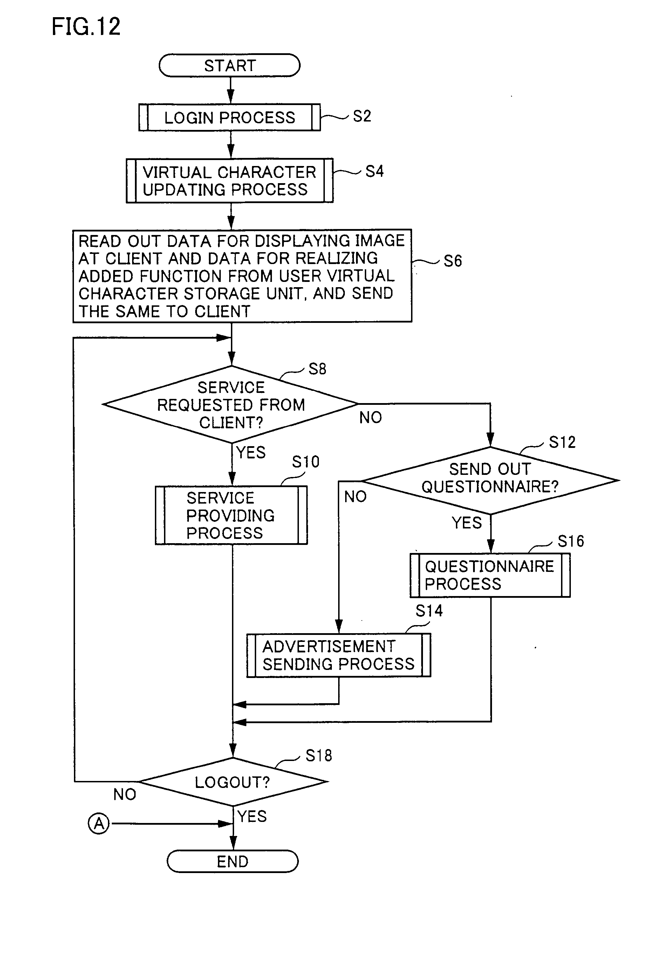

Referring to Fig. 12, the programs running on server computer 100 have the control structure as follows.

In step 2 (hereinafter, a step is simply referred to as "S"), server computer 100 performs a login process upon detection of an access from client computer 200.

In S4, server computer 100 performs a virtual character updating process based on a character update flag stored in user virtual character storage unit 580.

In S6, server computer 100 reads out image data representing a virtual character and data for implementing an added function stored in user virtual character storage unit 580, and sends the data to client computer 200.

In S8, server computer 100 determines whether a service request has been received from client computer 200 for which the login process was performed. If so ("Yes" in S8), process goes to S10. Otherwise ("No" in S8), process goes to S12.

In S10, server computer 100 provides client computer 200 with the service requested.

When a service request has not arrived from client computer 200, in S12, server computer 100 determines whether or not to send a questionnaire. This determination is made according to whether the current day and time corresponds to the day and time when the questionnaire is supposed to be sent out. When the questionnaire is to be sent out ("Yes" in S12), process goes to S16, where server computer 100 sends the questionnaire to client computer 200. Otherwise ("No" in S12), process goes to S14, where server computer 100 sends advertisement information to client computer 200.

After the process in S10, S14 or S16, server computer 100 determines whether to log out or not based on a request from client computer 200. After logging out ("Yes" in S18), process is terminated. Otherwise ("No" in S18), process returns to S8, where server computer 100 waits for a service request from the client.

Hereinafter, the login process in S2, the virtual character updating process in S4, the service providing process in S10, the questionnaire process in S16 and the advertisement sending process in S14 will be described in more detail.

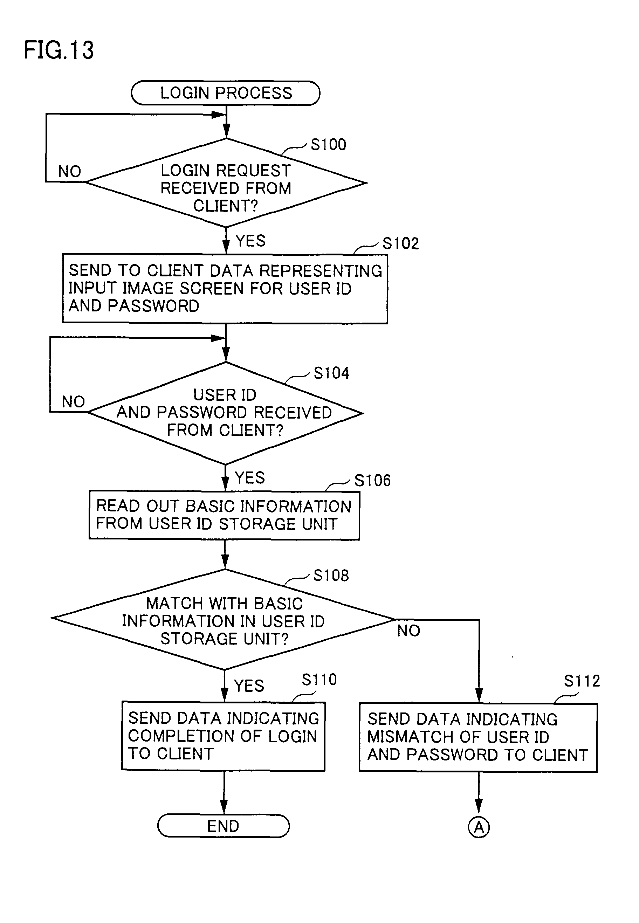

Referring to Fig. 13, the program running on login processing unit 410 in server computer 100 is directed to the login process, which has the control structure as follows. In the description below, it is assumed that the basic information shown in Fig. 5 has been stored.

In S100, CPU 620 determines whether a login request has been received from client computer 200 through communication interface 300. If so ("Yes" in S100), process goes to S102. Otherwise ("No" in S100), process returns to S100, where CPU 620 waits for a login request from client computer 200.

In S102, CPU 620 sends data representing an input image screen for user ID and password to client computer 200.

In S104, CPU 620 determines whether the user ID and password have been received from client computer 200. If so ("Yes" in S104), process goes to S106. Otherwise ("No" in S104), process returns to S104, where CPU 620 waits for the user ID and password from client computer 200.

In S106, CPU 620 reads out the basic information from user ID storage unit 510. In S108, CPU 620 determines whether the user ID and password received in S104 match the basic information in user ID storage unit 510 read out in S106. If the received user ID and password match the basic information in user ID storage unit 510 ("Yes" in S108), process goes to S110. Otherwise ("No" in S108), process goes to S112.

In S110, CPU 620 sends to client computer 200 data indicating that the login was successfully completed. In S112, CPU 620 sends to client computer 200 data indicating mismatch of the user ID and password.

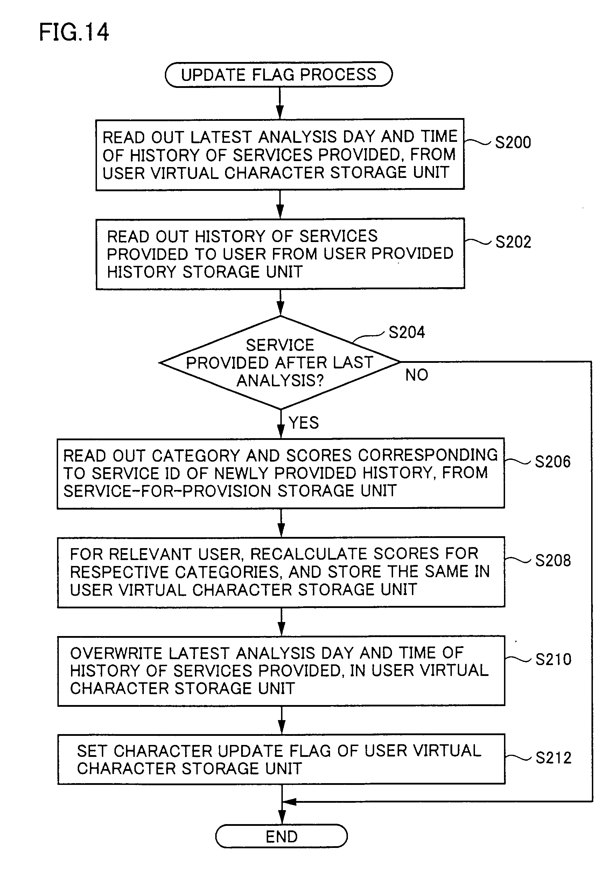

Referring to Fig. 14, the program running on update flag processing unit 420 in server computer 100 is directed to the update flag process, which has the control structure as follows. Note that this update flag process is conducted at intervals of a predetermined period of time.

In S200, CPU 620 reads out, from user virtual character storage unit 580, the day and time when the history of services provided to the user was analyzed the last time (hereinafter, also simply referred to as the "latest analysis day and time"). In S202, CPU 620 reads out the history of services provided to the user from user provided history storage unit 520. The history being read out in S202 includes the day and the time when a service was provided, the user ID for identification of the user to whom the service was provided, and the service ID for identification of the service provided (see Fig. 6).

In S204, CPU 620 determines whether a service has newly been provided to the user after the latest analysis day and time. If so ("Yes" in S204), process goes to S206. Otherwise ("No" in S204), the update flag process is terminated.

In S206, CPU 620 reads out the category and points corresponding to the service ID of the newly provided service, from service-for-provision storage unit 560. For example, for the service identified with the service ID of "01243", the category of "2" and the points of "+10" are read out in S206 (see Fig. 7).

In S208, for the user who received the service after the latest analysis day and time, CPU 620 recalculates the scores of respective categories by adding up the points of the newly provided service to the relevant category. The resultant scores are stored in user virtual character storage unit 580. In S210, CPU 620 writes the current day and time over the latest analysis day and time of the history of services provided to the user, stored in user virtual character storage unit 580.

In S212, CPU 620 sets the character update flag in user virtual character storage unit 580.

Thus, according to the update flag process, for a user having received a service after the latest analysis of the history of services provided thereto, the points for the newly received service are add to the score for the category to which the service belongs, the current day and time are written over the latest analysis day and time, and the character update flag is set. For a user who has not received a service after the last analysis of the history, the update flag process is terminated, without recalculating the points. The character update flag of such a user has been reset.

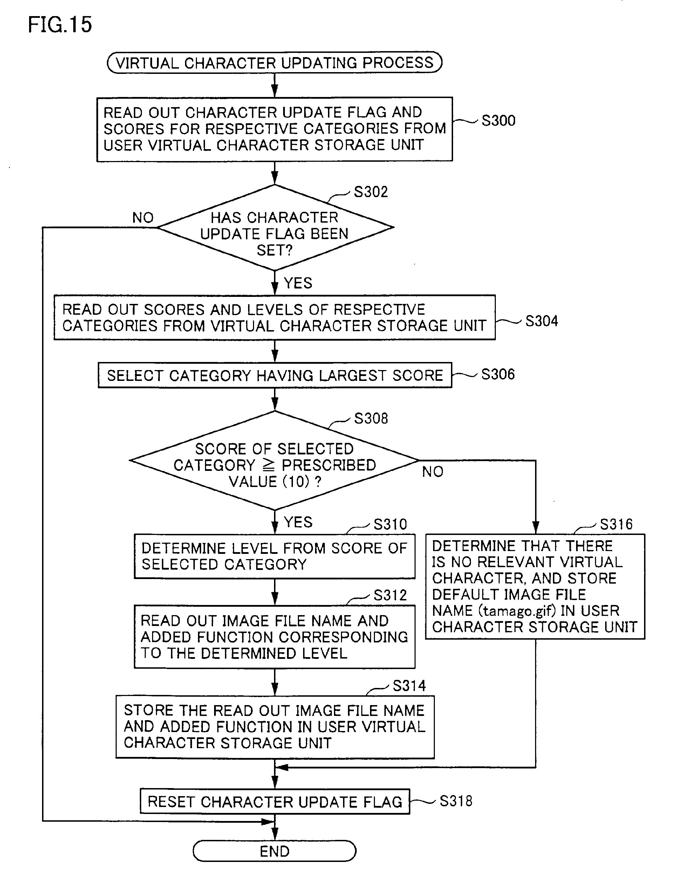

Referring to Fig. 15, the program running on virtual character updating unit 430 in server computer 100, regarding the virtual character updating process, has the control structure as follows.

In S300, CPU 620 reads out the character update flag and points for respective categories of the user who logged in, from user virtual character storage unit 580.

In S302, CPU 620 determines whether the character update flag of the logged-in user that was read out in S300 has been set. If so ("Yes" in S302), process goes to S304. If the flag has been reset ("No" in S302), the virtual character updating process is terminated.

In S304, CPU 620 reads out the points and the levels of respective categories from virtual character storage unit 570

In S306, CPU 620 selects a category whose score is highest for the relevant user. In S308, CPU 620 determines whether the score of the selected category is equal to or greater than a prescribed value. If so ("Yes" in S308), process goes to S310. If the score is less than the prescribed value ("No" in S308), process goes to S316.

In S310, CPU 620 determines the level from the score of the selected category. This determination is made based on a relation between the levels and scores stored in virtual character storage unit 570 (see Fig. 8).

In S312, CPU 620 reads out the image file name and the added function of the virtual character that corresponds to the level determined in S310, from virtual character storage unit 570. In S314, CPU 620 stores the image file name and the added function read out in S312, in user virtual character storage unit 580.

When it is determined that the score of the selected category is less than the prescribed value in S308 (i.e., the points have not been accumulated to the level enough to determine a category that is characteristic to the relevant user), in S316, CPU 620 determines that there is no relevant virtual character. In this case, a default image file name (tamago.gif) is stored as the image file name in user virtual character storage unit 580. Stored in this default image file is a virtual character (created based on an image of an egg of an animal) that has little association with any categories.

After the process in S314 or S316, CPU 620 resets the character update flag in S318.

Thus, according to the virtual character updating process, at the time when the character update flag of the logged-in user is set, a category whose score is highest is selected. The level is determined based on the score, and the image file name and the added function corresponding to the determined level are stored in user virtual character storage unit 580. The character update flag is then reset. The preference information as shown in Fig. 5 is stored based on the name representing the category having such a highest score.

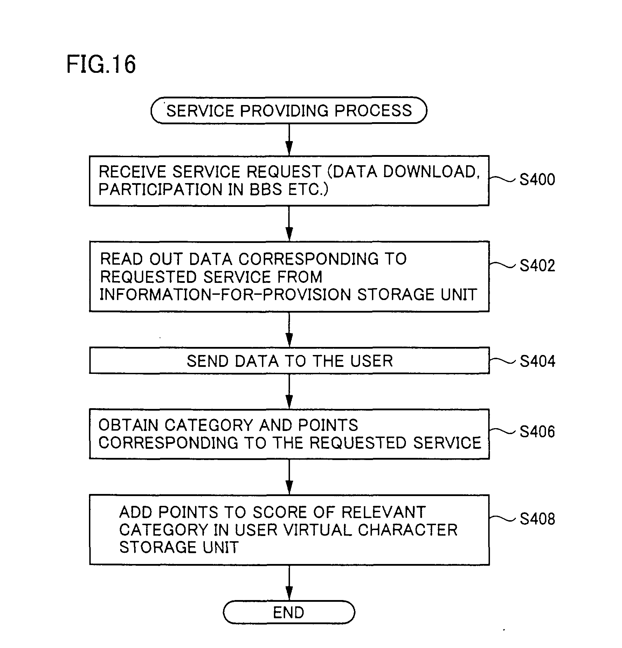

Referring to Fig. 16, the program running on service providing unit 440 in server computer 100, regarding the service providing process, has the control structure as follows.

In S400, CPU 620 receives a service request from the logged-in user. Here, the service request includes, e.g., requests for download of music data or image data, and requests for participation in chat or electronic bulletin board. Hereinafter, the case where download of data is requested will be described.

In S402, CPU 620 reads out data corresponding to the service requested in S400, from information-for-provision storage unit 530.

In S404, CPU 620 sends the data that was read out from information-for-provision storage unit 530 in S402, to client computer 200 that the logged-in user is using.

In S406, CPU 620 obtains the category and points corresponding to the service provided in S404, i.e., sending of the data to the user. The category and points are obtained from the service ID and the information stored in service-for-provision storage unit 560 shown in Fig. 7.

In S408, CPU 620 adds the points of the service to the score of the relevant category in user virtual character storage unit 580.

Thus, according to the service providing process, upon reception of a service request from a user, the service requested is provided (e.g., data is sent) to the relevant user. The category corresponding to the service provided (in this case, the sending of the data) is determined, and predetermined points are added to the score of the category thus determined.

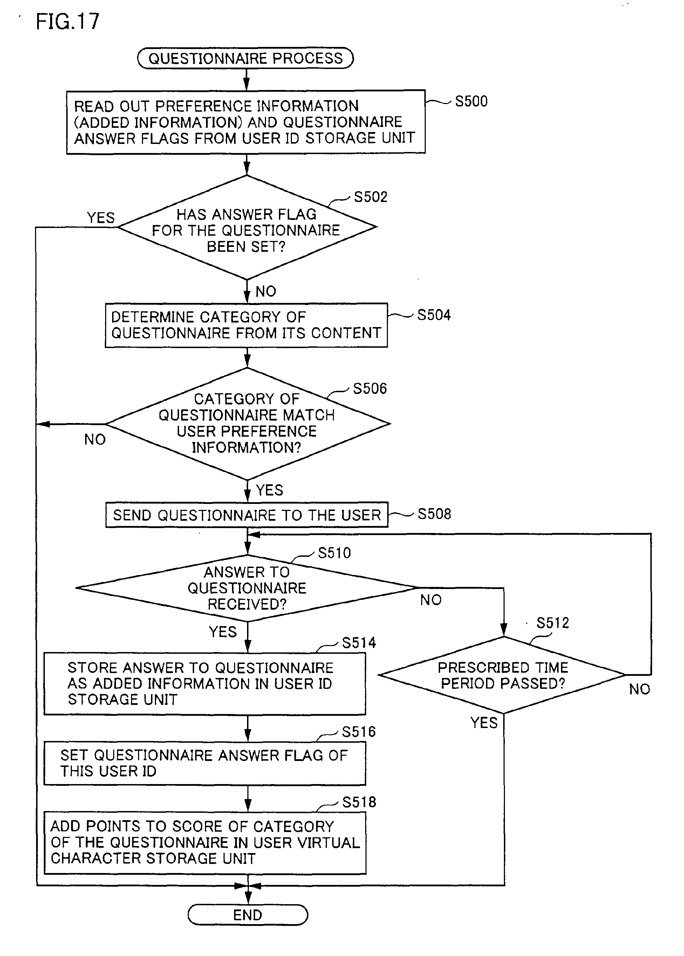

Referring to Fig. 17, the program running on questionnaire processing unit 450 in server computer 100, regarding the questionnaire process, has the control structure as follows. In the description below, it is assumed that questionnaire storage unit 540 stores a plurality of questionnaires and, for each questionnaire, the date (day, time zone) when the relevant questionnaire is supposed to be sent out. As shown in Fig. 5, user ID storage unit 510 stores, for each user, questionnaire answer flags for respective questionnaires. Each questionnaire answer flag is set for the questionnaire that has already been answered, and reset for the one that has not been answered.

In S500, CPU 620 reads out preference information and questionnaire answer flags of the logged-in user from user ID storage unit 510.

In S502, CPU 620 determines whether the questionnaire answer flag for the questionnaire that is to be sent out this time has been set. If so ("Yes" in S502), the questionnaire process is terminated. Otherwise ("No" in S502), process goes to S504. This step S502 prevents a user having its questionnaire answer flag set for the questionnaire (i.e., the user who has already answered it) from receiving the same questionnaire again.

In S504, CPU 620 determines a category of the questionnaire from its content. This determination is made based on a questionnaire name given according to the content of the questionnaire.

In S506, CPU 620 determines whether this category of the questionnaire determined in S504 matches the preference information read out in S500. The preference information has been created based on the name of the category in the virtual character updating process. If the category of the questionnaire matches the user preference information ("Yes" in S506), process goes to S508. Otherwise ("No" in S506), the questionnaire process is terminated.

In S508, CPU 620 sends the questionnaire to the logged-in user. At this time, the questionnaire is sent in a form of data for implementing a motion of the virtual character of the logged-in user to send out the questionnaire in client computer 200. Specifically, in client computer 200, the virtual character of the user makes a motion to display the questionnaire and a motion to prompt the user to answer it. The answer to the questionnaire input by the user is sent to server computer 100.

In S510, CPU 620 determines whether the answer to the questionnaire sent in S508 has been received. If so ("Yes" in S510), process goes to S514. Otherwise ("No" in S510), process goes to S512.

In S512, CPU 620 determines whether a predetermined time period has passed. If the predetermined time period has passed without receiving the answer ("Yes" in S512), the questionnaire process is terminated. Otherwise ("No" in S512), process returns to S510, where CPU 620 waits for the answer from client computer 200.

In S514, CPU 620 stores the answer received in S510 as the added information in user ID storage unit 510. In S516, CPU 620 sets the relevant questionnaire answer flag of the logged-in user. In S518, CPU 620 adds prescribed points to the score of the category to which the questionnaire belongs, in user virtual character storage unit 580.

Thus, according to the questionnaire process, a questionnaire is sent to the logged-in user under the conditions where the category to which the questionnaire belongs matches the preference information of the relevant user and the user has not answered the questionnaire before. When the user sends the answer to the questionnaire, the corresponding points are added to the score of the category to which the questionnaire belongs.

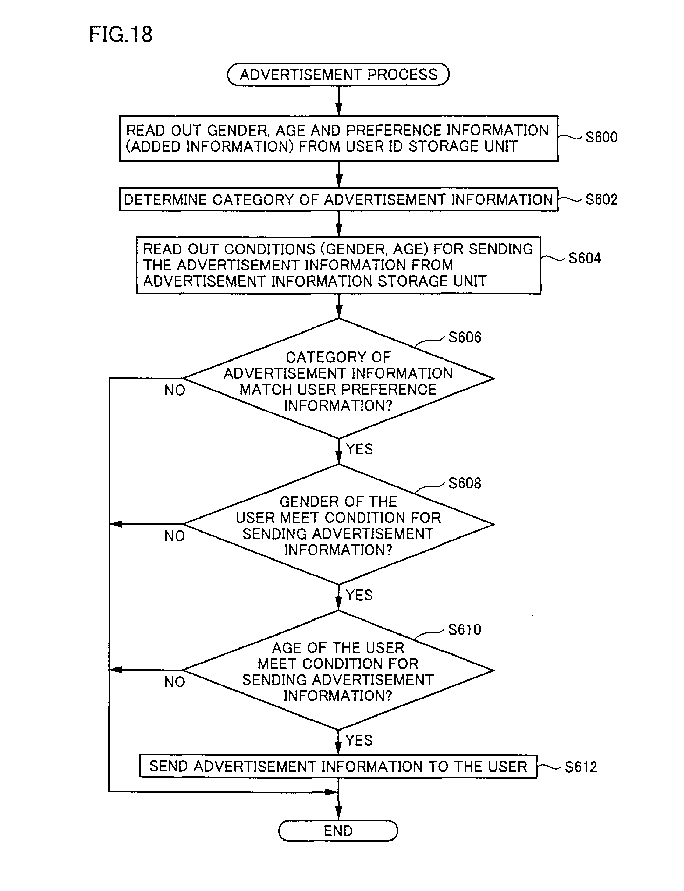

Referring to Fig. 18, the program running on advertisement processing unit 460 in server computer 100 has, regarding the advertisement process, the control structure as follows. In the description below, it is assumed that advertisement information storage unit 550 stores a plurality of advertisements and, for each advertisement, the day and time zone when the advertisement is to be sent, and conditions (gender, age) for sending the advertisement.

In S600, CPU 620 reads out the gender, age and preference information of the logged-in user from user ID storage unit 510.

In S602, CPU 620 selects, based on current day and time, advertisement information that is to be sent, and determines the category of the selected advertisement information. The category is determined based on an advertisement name given according to the content of the advertisement.

In S604, CPU 620 reads out the conditions (gender, age) for sending the relevant advertisement information from advertisement information storage unit 550.

In S606, CPU 620 determines whether the category of the advertisement information determined in S602 matches the preference information of the logged-in user. If they match ("Yes" in S606), process goes to S608. If they do not match ("No" in S606), the advertisement process is terminated.

In S608, CPU 620 determines whether the gender of the relevant user meets the condition for sending the advertisement information that was read out in S604. If so ("Yes" in S608), process goes to S610. Otherwise ("No" in S608), the advertisement process is terminated.

In S610, CPU 620 determines whether the age of the user meets the condition for sending the advertisement information. This determination is made by checking whether the age of the user is included within a prescribed age range as the condition for sending the advertisement information. If the age of the user meets the condition for sending the advertisement information ("Yes" in S610), process goes to S612.
Otherwise ("No" in S610), the advertisement process is terminated.

In S612, CPU 620 sends the advertisement information to the user.
The advertisement information being sent in S612 is the data for implementing a motion of the virtual character of the user in client computer 200 to prompt the user to access the advertisement information. Specifically, in client computer 200, the virtual character of the user makes a motion to point a URL (uniform resource locator) for access to the advertisement information, to prompt the user to access the information.

Thus, according to the advertisement process, the gender, age and preference information of the logged-in user are read out from the user ID storage unit. If the gender and age of the user thus read out meet the conditions for sending advertisement information, the advertisement information is sent. In client computer 200 where the advertisement information is received, the virtual character makes a motion to prompt the user to access the advertisement information.

The operations of server computer 100 based on the structures and flow charts explained above will now be described. In the description below, it is assumed that the virtual character is to be displayed on a portal site of the user.

### Login Process

A request for login is sent from client computer 200 to server computer 100 ("Yes" in S100). Data representing an input image screen for user ID and password is sent from server computer 100 to client computer 200 that issued the login request (S102). Server computer 100 receives the user ID and password from client computer 200 ("Yes" in S104). The basic information (user ID, password) is read out from user ID storage unit 510 (S106). If the user ID and password received at server computer 100 match the basic information in user ID storage unit 510 ("Yes" in S108), data indicating that the login was successfully completed is sent to client computer 200 (S110).

### Virtual Character Updating Process

When a user logs in, server computer 100 reads out a character update flag and scores for respective categories of the logged-in user, from user virtual character storage unit 580 (S300). If the character update flag of the relevant user ID has been set ("Yes" in S302), scores and levels of respective categories are read out from virtual character storage unit 570 (S304).

For the user with the character update flag having been set, a category whose score is highest is selected (S306). If the score of the selected category is equal to or greater than a prescribed value ("Yes" in S308), a level is determined from the score of the selected category (S310). The level is determined based on the data stored in virtual character storage unit 570 shown in Fig. 8.

An image file name and added function corresponding to the determined level are read out from virtual character storage unit 570 (S312). The image file name and added function read out are stored in user virtual character storage unit 580 (S314). After the virtual character updating process is conducted for the logged-in user, the character update flag is reset (S318).

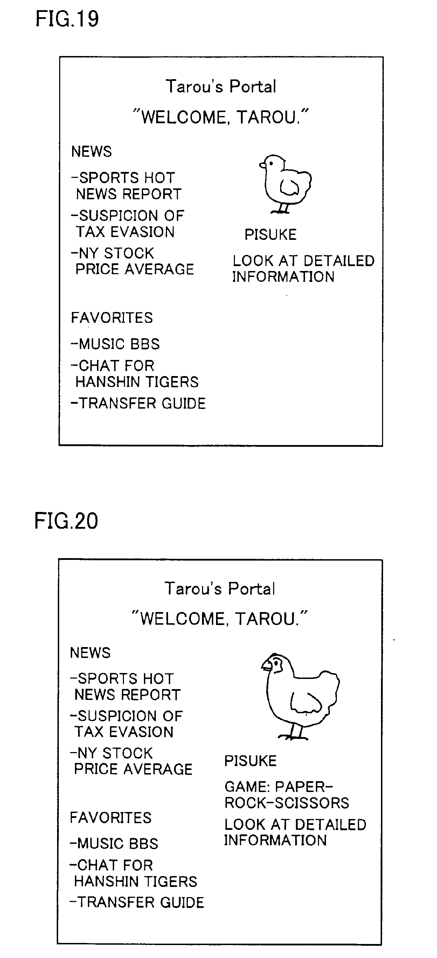

When the login process of the user employing client computer 200 and the virtual character updating process are completed, the virtual character is displayed on the portal site of the user, as shown in Fig. 19. At this time, the user is able to give a character name to the virtual character. The user is also able to look at detailed information of the virtual character displayed. The detailed information includes, for example, the character name, the image file name, the added function, the selected category, the selected level, and the scores for respective categories, as shown in Fig. 9. The user is not allowed to look at detailed information of other users.

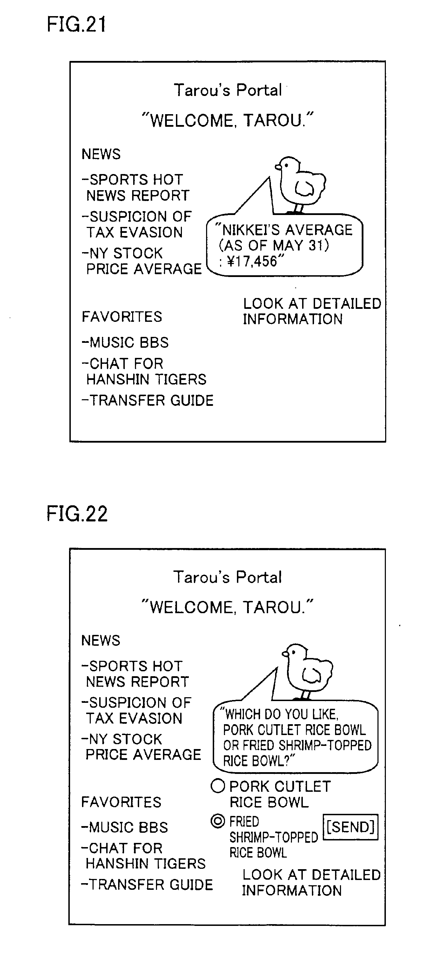

As shown in Figs. 20 and 21, not only the character name but also the added function provided to the character are displayed. Referring to Fig. 21, when the character is provided with a stock news delivery function as the added function, the virtual character makes a motion to deliver the stock news to the user. Accordingly, the virtual character shown in Fig. 19 grows to the virtual character as shown in Fig. 20. Such growth of the character is based on the history of services provided from server computer 100 to the user.

### Service Providing Process

Assume that the user requests to server computer 100 to provide a service or news (of stock price average) at the portal site shown in Fig. 20. Server computer 100 then reads out the data corresponding to the requested service or the news (of stock price average) from information-for-provision storage unit 530 (S402). The read out data of the news (of stock price average) is provided to the user (S404). Server computer 100 determines the category of the sent data. In this case, the category is determined as "stock" from the service ID of "03445". Server computer 100 adds predetermined points (5 points) to the score of the relevant category (in this case, the category of "stock") in user virtual character storage unit 580 (S408).

### Update Flag Process

When the user receives a service by the service providing process, the day and the time when the service was provided, the user ID for identification of the user who received the service, and the service ID for identification of the service provided, are stored in user provided history storage unit 520 as shown in Fig. 6.

The latest analysis day and time of the history of services provided to the user are read out from user virtual character storage unit 580 at intervals of a predetermined period of time (S200). In this case, the latest analysis day and time being read out are those stored for each user shown in Fig. 9. The history of services provided to the user is read out from user provided history storage unit 520 (S202). The history being read out at this time includes the day and time when the service was provided, the user ID for identification of the user who received the service, and the service ID for identification of the service provided, as shown in Fig. 6.

Server computer 100 determines, for each user, whether a service has newly been provided to the user after the latest analysis day and time. If so ("Yes" in S204), the category and points corresponding to the relevant service ID shown in Fig. 7 are read out from service-for-provision storage unit 560 (S206). The points of respective categories are recalculated for the relevant user, and the resultant scores are stored in user virtual character storage unit 580 (S208). The current day and time are written over the latest analysis day and time (S210), and the character update flag is set (S212).

Accordingly, the service providing process provides the logged-in user with a service, e.g., to receive download of news or music data, or to participate in chat or electronic bulletin board. When the user receives the service, points corresponding to the service are added to the score of the category to which the relevant service belongs. The update flag process is conducted at intervals of a predetermined time period, and the character update flag is set for a user who has received a service after the latest analysis day and time. Next time the same user logs in, the virtual character updating process is performed. On the portal site of each user of client computer 200, a grown virtual character is displayed. The virtual character as shown in Fig. 19 is grown according to the points being accumulated, and the grown character as shown in Fig. 20 is displayed on the portal site.

### Questionnaire Process

If the system is configured such that a questionnaire is to be sent to a user, then, a predetermined time period after the login of the user, the preference information and the questionnaire answer flag of the logged-in user are read out from user ID storage unit 510 (5500). If the answer flag has been set for the questionnaire that is supposed to be sent at that time zone ("Yes" in S502), the questionnaire process is not conducted for the user, as the user has already answered the questionnaire. If the answer flag for the questionnaire has been reset ("No" in S502), the category to which the questionnaire belongs is determined from the content of the questionnaire stored in questionnaire storage unit 540 (S504). If the category to which the questionnaire belongs and the preference information of the logged-in user match with each other ("Yes" in S506), the questionnaire is sent to the user (S508).

When the questionnaire is sent to the logged-in user (S508), the virtual character is displayed on the portal site of the user, as shown in Fig. 22. The virtual character makes a motion to display the questionnaire and a motion to prompt the user to answer the questionnaire. The user uses client computer 200 to select the answer to the questionnaire and pushes a send button. Server computer 100 receives the answer thus sent ("Yes" in S510).

Before a predetermined time has passed ("No" in S512), if the answer is received from the user ("Yes" in S510), then the received answer is stored in user ID storage unit 510 as the added information (S514). Upon receipt of the answer from the user, the questionnaire answer flag is set (S516). As shown in Fig. 5, when the user makes an answer to the first questionnaire, the answer is stored as the added information, and the questionnaire answer flag for the first questionnaire is set.

Upon receipt of the answer from the user, server computer 100 adds predetermined points to the score of the category to which the questionnaire belongs, for the relevant user stored in user virtual character storage unit 580 (S518).

### Advertisement Process

The advertisement process is conducted if no request for providing a service is received from server computer 100 before a predetermined time period has passed from the user login and if no questionnaire is supposed to be sent at the current day and time.

The gender, age and preference information of the user are read out from user ID storage unit 510 (S600). The advertisement information that is to be sent at the time zone is read out from advertisement information storage unit 550, and the category to which the relevant advertisement information belongs is determined (S602).

The conditions (gender, age) for sending the advertisement information are read out from advertisement information storage unit 550 (S604). Only in the case where the category of the advertisement information matches the preference information of the user ("Yes" in S606), the gender of the user meets the condition for sending the advertisement information ("Yes" in S608) and the age of the user meets the condition for sending the advertisement information ("Yes" in S610), the advertisement information is sent to the user (S612).

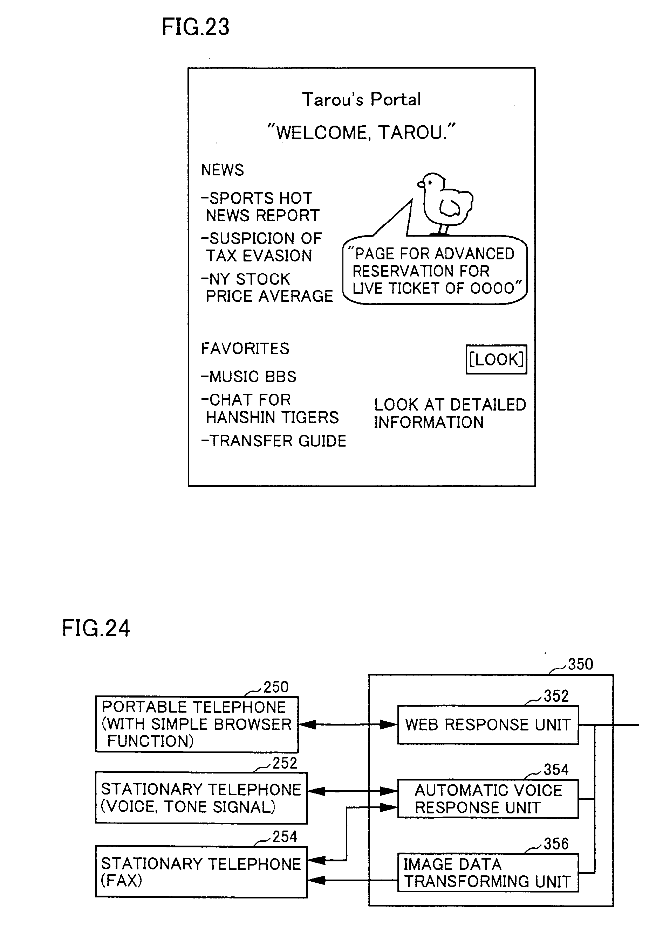

When the advertisement information is sent from server computer 100 to client computer 200 (S612), the virtual character is displayed on the portal site of the user, as shown in Fig. 23. The virtual character makes a motion to indicate the title of the advertisement information. A button for accessing the advertisement information is displayed, and the user can visit the predetermined URL by pushing the button, and read the advertisement whose title has been displayed on the portal site.

As explained above, the server computer according to the present embodiment is able to let the virtual character grow based on the contents of the services having been provided to the logged-in user. The function allowed for the virtual character is improved as it grows. As a result, it is possible to provide, in a server-client system, a server computer that permits a virtual character stored therein to grow according to operations of the client, and whose function allowed within the system is improved according to the growth of the virtual character.

The virtual character updating process in S4 described above may be conducted, not after the login process in S2, but immediately before or immediately after the logout. Alternatively, the virtual character updating process in S4 may be conducted every time the service providing process is conducted in S10, or every time the questionnaire process is conducted in S16.

Further, in the update flag process, the determination may be made as to whether the accumulated points or score of a category has crossed a border between two levels after S208, and the character update flag may be set only when the score has crossed the border.

In addition, in the questionnaire process, certain gender and age may be preset for each questionnaire, and the determination as to whether to send the questionnaire or not may be made based on the preset gender and age.

### Second Embodiment

The server computer according to the present embodiment includes, instead of the communication interface 300 in the first embodiment, a communication interface 350 having a different function.

Referring to Fig. 24, communication interface 350 includes: a web response unit 352 that is connected to a portable telephone 250 of a user through a telephone line for portable telephone; an automatic voice response unit 354 that is connected to a stationary telephone 252 of the user through a telephone line for stationary telephone; and an image data transforming unit 356 that is connected to a stationary telephone provided with a facsimile function (hereinafter, referred to as "stationary telephone (facsimile)") 254 of the user through the telephone line for stationary telephone. Web response unit 352, automatic voice response unit 354 and image data transforming unit 356 are connected to the control unit 400, and operate based on control signals from control unit 400.

In the present embodiment, virtual character storage unit 570 stores, in addition to the image data of the virtual character, audio data (e.g., bird songs) of the virtual character. Otherwise, the hardware configuration of the second embodiment is identical to that of the first embodiment, and thus, detailed description thereof is not repeated here.

Web response unit 352 transforms the data indicating the input image screen for user ID and password into the data format that can be displayed using the browser function provided to portable telephone 250, and sends the transformed data to portable telephone 250. Web response unit 352 transforms the data representing the virtual character that is stored in user virtual character storage unit 580 into the data format that can be displayed using the browser function provided to portable telephone 250 before sending thereto.

In the description below, it is assumed that the user terminal device includes, in addition to portable telephone 250, stationary telephone 252 and stationary telephone (facsimile) 254, an information terminal like a PDA (personal digital assistant) having a browser function.

Automatic voice response unit 354 responds to the login request with tone signals from stationary telephone 252, and executes a login request process using synthetic voice. Automatic voice response unit 354 transforms the audio data of the virtual character stored with the image data, to the data format that can be output by the stationary telephone, and sends the transformed data to stationary telephone 252.

Image data transforming unit 356 responds to the request from stationary telephone (facsimile) 254, transforms the image data of the virtual character to the data format that can be output by a facsimile, and sends the transformed data to stationary telephone (facsimile) 254.

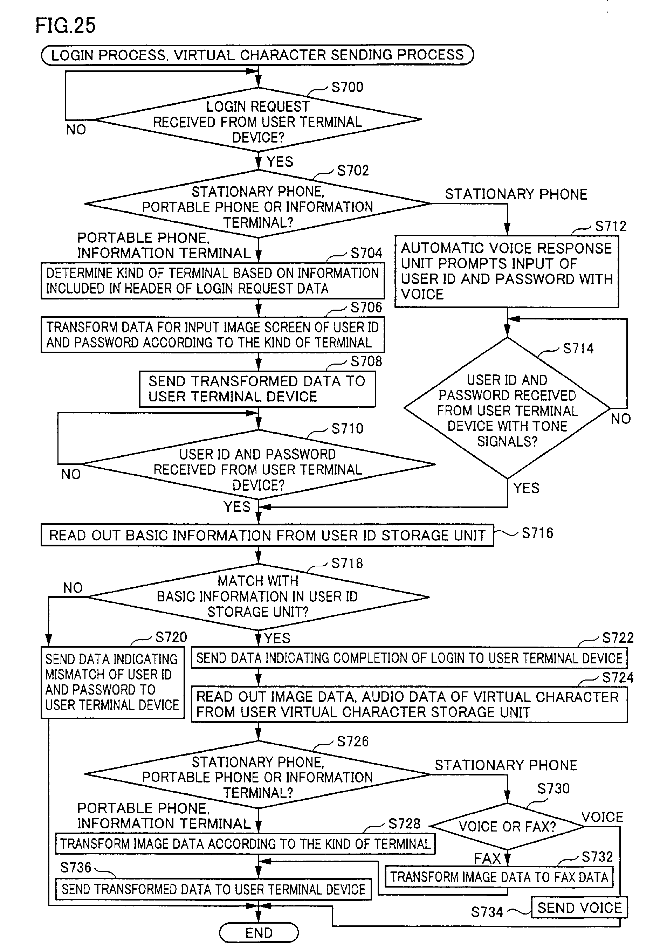

Referring to Fig. 25, the login process and the virtual character sending process of server computer 100 according to the present embodiment will be described. The other processes are identical to those in the first embodiment, and therefore, detailed description thereof will not be repeated.

In S700, CPU 620 determines whether a login request was received from the terminal device of the user. If so ("Yes" in S700), process goes to S702. Otherwise ("No" in S700), process returns to S700, where CPU 620 waits for the login request from a user terminal device.

In S702, CPU 620 determines whether the user terminal device from which the request was received in S700 is a stationary telephone, portable telephone or information terminal. If it is the stationary telephone ("stationary telephone" in S702), process goes to S712. If it is the portable telephone or the information terminal ("portable telephone, information terminal" in S702), process goes to S704.

In S704, CPU 620 determines the kind of the terminal device. The determination is made based on the information included in a header of the received login request data.

In S706, CPU 620 transforms the data indicating the input image screen for user ID and password, according to the kind of the terminal device determined in S704. In S708, CPU 620 sends the data transformed in S706 to the terminal device of the user.

In S710, CPU 620 determines whether user ID and password have been received from the terminal device of the user. If so ("Yes" in S710), process goes to S716. Otherwise ("No" in S710), process returns to S710, where CPU 620 waits until the user ID and password are received from the terminal device of the user.

When the terminal device of the user which issued the received login request is the stationary telephone, in S712, CPU 620 controls automatic voice response unit 354 to request the user to input the user ID and password. In S714, CPU 620 determines whether the user ID and password have been received from the terminal device of the user by tone signals. If so ("Yes" in S714), process goes to S716. Otherwise ("No" in S714), process returns to S714, where CPU 620 waits until the user ID and password are received by tone signals.

In S716, CPU 620 reads out the basic information (user ID, password) from user ID storage unit 510. In S718, CPU 620 determines whether the received user ID and password match the basic information in user ID storage unit 510. If they match ("Yes" in S718), process goes to S722. If they do not match ("No" in S718), process goes to S720.

In S720, CPU 620 sends data indicating the mismatch of the user ID and password to the terminal device of the user.

In S722, CPU 620 sends data indicating that the login is completed to the terminal device of the user. If the user terminal device is the portable telephone or the information terminal, the sending processes in S720 and S722 are performed by sending the data through web response unit 352. If the user terminal device is the stationary telephone, the processes are performed by sending synthetic voice from automatic voice response unit 354.

In S724, CPU 620 reads out the image data and audio data of the virtual character from user virtual character storage unit 580. In S726, determination is made whether the terminal device of the logged-in user is a stationary telephone, portable telephone or information terminal. The process in this step S726 is identical to the process in S702 described above. If the terminal device is the portable telephone or the information terminal, in S728, CPU 620 transforms the image data read out in S724, according to the kind of the terminal device.

When the terminal device of the user is the stationary telephone, in S730, CPU 620 determines whether the user desires reception of the virtual character by voice or facsimile. This determination is made based on the answer that was input by the user according to the synthetic voice output from automatic voice response unit 354. If the user wants to receive the character by voice ("voice" in S730), process goes to S734. If the user wants to receive the character by facsimile ("FAX" in S730), in S732, image data transforming unit 356 transforms the image data into the data that can be output by the facsimile.

After the data transformation in S728 and S732, in S736, CPU 620 sends the transformed data to the terminal device of the user. When the user wants to receive the virtual character by the voice, in S734, the audio data stored in user virtual character storage unit 580 is transformed into the data format with which the stationary telephone can output the voice, and the transformed data is sent to the stationary telephone.

The operation of server computer 100 according to the present embodiment based on the structures and flow charts explained above will now be described.

If Terminal Device is Portable Telephone or Information Terminal

When a user sends a login request using a terminal device having a browser function, such as a portable telephone or an information terminal, server computer 100 receives the login request from the terminal device of the user ("Yes" in S700). The kind of the terminal device is determined based on the information included in the header of the login request data that was sent from the portable telephone or information terminal to server computer 100 (S704). Based on the kind of the terminal device, the data indicating the input image screen for user ID and password is transformed (S706), and the transformed data is sent to the terminal device of the user (S708).

When the terminal device of the user receives the data indicating the input image screen for user ID and password, the input image screen for user ID and password is displayed on a display screen of the portable telephone or information terminal. When the terminal device of the user sends the user ID and password, server computer 100 determines that the user ID and password were received from the terminal device of the user ("Yes" in S710). In this case, web response unit 352 receives the user ID and password sent from the portable telephone or information terminal.

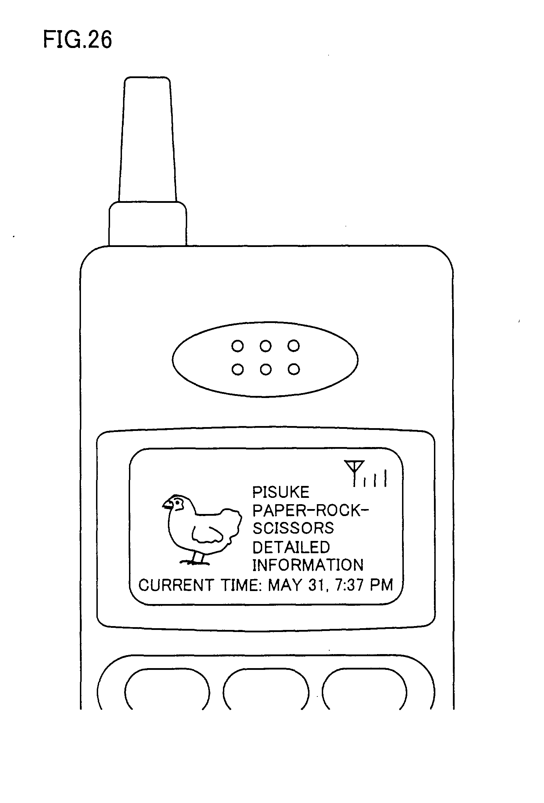

If the received user ID and password match the basic information in user ID storage unit 510 ("Yes" in S718), the data indicating that the login is completed is transformed into the data format corresponding to the kind of the terminal device, portable telephone or information terminal, and sent to the relevant device (S722). The image data of the virtual character of the logged-in user is read out from user virtual character storage unit 580 (S724), and transformed according to the kind of the terminal device (S728). The transformed data is sent to the terminal device of the user (S736). The data thus transmitted makes it possible to display the virtual character on a display unit of the terminal device of the user, portable telephone or information terminal. In the case of the portable telephone, for example, the portal site is displayed on the display unit of the portable telephone, with the virtual character of the user being displayed therein, as shown in Fig. 26.

### If Terminal Device is Stationary Telephone (Voice)

When a user issues a login request using the stationary telephone, server computer 100 receives the login request from the user terminal device (S700). At this time, the login request by tone signals from the stationary telephone is sent through automatic voice response unit 354 to a control unit. Automatic voice response unit 354 uses synthetic voice to prompt input of the user ID and password (S712), and the user inputs the user ID and password with the tone signals. The tone signals are sent to server computer 100, and server computer 100 determines that the user ID and password were received ("Yes" in S714).

If the user ID and password received by the tone signals match the basic information read out from user ID storage unit 510 ("Yes" in S718), the data indicating that the login is completed is sent to the terminal device of the user (S722). In this case, automatic voice response unit 354 sends the synthetic voice notifying the completion of the login. The audio data of the virtual character of the logged-in user is read out from user virtual character storage unit 580 (S724). The read out audio data is transformed into the data format that can be output from the stationary telephone, and sent thereto (S734).

### If Terminal Device is Stationary Telephone (Facsimile)

The login process and virtual character sending process in the case where the terminal device of the user is a stationary telephone and the user wants to receive the data of the virtual character by facsimile will be described. The operations for the login process in S700-S722 are identical to the case of the stationary telephone (voice) described above, and thus, detailed description thereof is not repeated here.

Server computer 100 reads out the image data of the virtual character of the logged-in user from user virtual character storage unit 580 (S724). The read out image data is transformed such that it can be output by the facsimile (S732). The transformed data is sent to the terminal device of the user (S736). When the data thus transformed to the data format for output by the facsimile is sent to the stationary telephone (facsimile) as the user terminal device, the image of the virtual character is output from the stationary telephone (facsimile).

As explained above, according to the present embodiment, it is again possible to provide a server computer that permits a virtual character stored therein to grow according to the operations of the client, regardless of the kind of the terminal device, and whose function in the server-client system is improved according to the growth of the virtual character.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A server computer sending a virtual character to a client computer through a network, comprising:
a communication circuit connected to said network for communicating with said client computer;
an identification circuit connected to said communication circuit for identifying a user using said client computer based on data received from said client computer;
a providing circuit connected to said communication circuit for providing a service to said user according to a request from said user;
a history storage circuit connected to said providing circuit for storing a history of services provided to said user;
a storage circuit for storing data representing the virtual character changeable in figure based on said history of services provided; and
a sending circuit connected to said communication circuit, said identification circuit, said history storage circuit and said storage circuit, for sending the data representing the virtual character having its figure changed based on the history of services provided to the user identified by said identification circuit, to the client computer used by said identified user.

2. The server computer according to claim 1, wherein said history storage circuit includes a storage circuit that stores the history of services provided to said user as history points that are calculated by adding up points prescribed for each kind of said services, and said virtual character is changeable in figure based on said history points.

3. The server computer according to claim 1, further comprising a determining circuit connected to said communication circuit for determining a data format with which said client computer is able to output, wherein
said sending circuit includes a circuit that transforms the data representing the virtual character having its figure changed based on the history of services provided to the user identified by said identification circuit to said data format determined by said determining circuit, to send to the client computer used by said identified user.

4. The server computer according to claim 1, wherein
said providing circuit includes a circuit for providing information to said user according to a request from said user, and
said history storage circuit includes a circuit for storing the history of services provided to said user after classifying the services within the history into categories,
said server computer further comprising a preference information storage circuit connected to said history storage circuit for generating and storing preference information of said user based on said history with the services classified into the categories.

5. The server computer according to claim 4, wherein said storage circuit includes a circuit for storing data including a plurality of virtual characters, said plurality of virtual characters being changeable in figures based on said history of services provided,
said server computer further comprising a character select circuit connected to said preference information storage circuit and said storage circuit for selecting one of said plurality of virtual characters based on said user preference information, wherein
said sending circuit includes a circuit for sending the data representing the virtual character selected by said character select circuit having its figure changed based on the history of services provided to the user identified by said identification circuit, to the client computer used by said identified user.

6. The server computer according to claim 4, further comprising:
a motion data storage circuit for storing data for implementation of a motion of said virtual character in the client computer, said motion being for displaying a questionnaire to a user at said client computer and for sending an answer to the questionnaire back to said server computer; and
a user select circuit connected to said preference information storage circuit for selecting a user based on the preference information stored in said preference information storage circuit and a content of said questionnaire, wherein
said sending circuit includes a circuit, when the user selected by said user select circuit is the user identified by said identification circuit, for sending the data representing the virtual character having its figure changed based on the history of services provided to said selected user and the data for implementation of said motion stored in said motion data storage circuit, to the client computer used by said selected user.

7. The server computer according to claim 4, further comprising:
a motion data storage circuit for storing data for implementation of a motion of said virtual character in the client computer, said motion being for prompting a user to access advertisement information; and
a user select circuit connected to said preference information storage circuit for selecting a user based on the preference information stored in said preference information storage circuit and a content of said advertisement information, wherein
said sending circuit includes a circuit, when the user selected by said user select circuit is the user identified by said identification circuit, for sending the data representing the virtual character having its figure changed based on the history of services provided to said selected user and the data for implementation of said motion stored in said motion data storage circuit, to the client computer used by said selected user.

8. The server computer according to claim 1, further comprising a motion data storage circuit for storing data for implementation of a motion of said virtual character in the client computer, wherein
said sending circuit includes a circuit for sending the data representing the virtual character having its figure changed based on the history of services provided to the user identified by said identification circuit and the data for implementation of said motion stored in said motion data storage circuit, to the client computer used by said identified user.

9. The server computer according to claim 8, wherein said history storage circuit includes a circuit that stores the history of services provided to said user as history points obtained by adding up points prescribed for each kind of said services, and
the motion to be implemented in said client computer is determined according to said history points.

10. The server computer according to claim 8, wherein said motion is determined according to said history of services provided and is for displaying a questionnaire to a user in said client computer and for sending an answer input by said user back to said server computer.

11. A server computer sending a virtual character to a client computer through a network, comprising:
communication means connected to said network for communicating with said client computer;
identification means connected to said communication means for identifying a user using said client computer based on data received from said client computer;
providing means connected to said communication means for providing a service to said user according to a request from said user;
history storage means connected to said providing means for storing a history of services provided to said user;
storage means for storing data representing the virtual character changeable in figure based on said history of services provided; and
sending means connected to said communication means, said identification means, said history storage means and said storage means, for sending the data representing the virtual character having its figure changed based on the history of services provided to the user identified by said identification means, to the client computer used by said identified user.

12. The server computer according to claim 11, wherein said history storage means includes means for storing the history of services provided to said user as history points that are calculated by adding up points prescribed for each kind of said services, and said virtual character is changeable in figure based on said history points.

13. The server computer according to claim 11, further comprising determining means connected to said communication means for determining a data format with which said client computer is able to output, wherein
said sending means includes means for transforming the data representing the virtual character having its figure changed based on the history of services provided to the user identified by said identification means to said data format determined by said determining means, to send to the client computer used by said identified user.

14. The server computer according to claim 11, wherein
said providing means includes means for providing information to said user according to a request from said user, and
said history storage means includes means for storing the history of services provided to said user after classifying the services within the history into categories,
said server computer further comprising preference information storage means connected to said history storage means for generating and storing preference information of said user based on said history with the services classified into the categories.

15. The server computer according to claim 14, wherein said storage means includes means for storing data including a plurality of virtual characters, said plurality of virtual characters being changeable in figures based on said history of services provided,
said server computer further comprising character select means connected to said preference information storage means and said storage means for selecting one of said plurality of virtual characters based on said user preference information, wherein
said sending means includes means for sending the data representing the virtual character selected by said character select means having its figure changed based on the history of services provided to the user identified by said identification means, to the client computer used by said identified user.

16. The server computer according to claim 14, further comprising:
motion data storage means for storing data for implementation of a motion of said virtual character in the client computer, said motion being for displaying a questionnaire to a user at said client computer and for sending an answer to the questionnaire back to said server computer; and
user select means connected to said preference information storage means for selecting a user based on the preference information stored in said preference information storage means and a content of said questionnaire, wherein
said sending means includes means, when the user selected by said user select means is the user identified by said identification means, for sending the data representing the virtual character having its figure changed based on the history of services provided to said selected user and the data for implementation of said motion stored in said motion data storage means, to the client computer used by said selected user.

17. The server computer according to claim 14, further comprising:
motion data storage means for storing data for implementation of a motion of said virtual character in the client computer, said motion being for prompting a user to access advertisement information; and
user select means connected to said preference information storage means for selecting a user based on the preference information stored in said preference information storage means and a content of said advertisement information, wherein
said sending means includes means, when the user selected by said user select means is the user identified by said identification means, for sending the data representing the virtual character having its figure changed based on the history of services provided to said selected user and the data for implementation of said motion stored in said motion data storage means, to the client computer used by said selected user.

18. The server computer according to claim 11, further comprising motion data storage means for storing data for implementation of a motion of said virtual character in the client computer, wherein
said sending means includes means for sending the data representing the virtual character having its figure changed based on the history of services provided to the user identified by said identification means and the data for implementation of said motion stored in said motion data storage means, to the client computer used by said identified user.

19. The server computer according to claim 18, wherein said history storage means includes means for storing the history of services provided to said user as history points obtained by adding up points prescribed for each kind of said services, and
the motion to be implemented in said client computer is determined according to said history points.

20. The server computer according to claim 18, wherein said motion is determined according to said history of services provided and is for displaying a questionnaire to a user in said client computer and for sending an answer input by said user back to said server computer.

21. A virtual character sending method in a server computer for sending a virtual character to a client computer through a network, comprising the steps of:
identifying a user using said client computer based on data received from said client computer;
providing said user with a service according to a request from said user;
storing a history of services provided to said user;
preparing data representing the virtual character changeable in figure based on said history of services provided; and
sending the data representing the virtual character having its figure changed based on the history of services provided to the user identified in said step of identifying the user, to the client computer used by said identified user.

22. The virtual character sending method according to claim 21, wherein said step of storing the history of services includes the step of storing the history of services provided to said user as history points that are calculated by adding up points prescribed for each kind of said services, and said virtual character is changeable in figure based on said history points.

23. The virtual character sending method according to claim 21, further comprising the step of determining a data format with which said client computer is able to output, wherein
said step of sending the data representing the virtual character includes the step of transforming the data representing the virtual character having its figure changed based on the history of services provided to the user identified in said step of identifying the user to said data format determined in said step of determining the data format, to send to the client computer used by said identified user.

24. The virtual character sending method according to claim 21, wherein
said step of providing the service includes the step of providing information to said user according to a request from said user,
said step of storing the history of services provided includes the step of storing the history of services provided to said user after classifying the services within the history into categories,
said virtual character sending method further comprising the step of generating and storing preference information of said user based on said history with the services classified into the categories.

25. The virtual character sending method according to claim 24, wherein said step of preparing the data representing the virtual character includes the step of preparing data including a plurality of virtual characters, said plurality of virtual characters being changeable in figures based on said history of services provided,
said virtual character sending method further comprising the step of selecting one of said plurality of virtual characters based on said user preference information, wherein
said step of sending the data representing the virtual character includes the step of sending the data representing the virtual character selected in said step of selecting one of the virtual characters having its figure changed based on the history of services provided to the user identified in said step of identifying the user, to the client computer used by said identified user.

26. The virtual character sending method according to claim 24, further comprising the steps of:
preparing data for implementation of a motion of said virtual character in the client computer, said motion being for displaying a questionnaire to a user at said client computer and for sending an answer to the questionnaire back to said server computer; and
selecting a user based on the preference information stored in said step of storing the preference information and a content of said questionnaire, wherein
said step of sending the data representing the virtual character includes the step, when the user selected in said step of selecting the user is the user identified in said step of identifying the user, of sending the data representing the virtual character having its figure changed based on the history of services provided to said selected user and the data for implementation of said motion prepared in said step of preparing the data for implementation of the motion, to the client computer used by said selected user.

27. The virtual character sending method according to claim 24, further comprising the steps of:
preparing data for implementation of a motion of said virtual character in the client computer, said motion being for prompting a user to access advertisement information; and
selecting a user based on the preference information stored in said step of storing the preference information and a content of said advertisement information, wherein
said step of sending the data representing the virtual character includes the step, when the user selected in said step of selecting the user is the user identified in said step of identifying the user, of sending the data representing the virtual character having its figure changed based on the history of services provided to the selected user and the data for implementation of said motion prepared in said step of preparing the data for implementation of the motion, to the client computer used by said selected user.

28. The virtual character sending method according to claim 21, further comprising the step of preparing data for implementation of a motion of said virtual character in the client computer, wherein
said step of sending the data representing the virtual character includes the step of sending the data representing the virtual character having its figure changed based on the history of services provided to the user identified in said step of identifying the user and the data for implementation of said motion prepared in said step of preparing the data for implementation of the motion, to the client computer used by said identified user.

29. The virtual character sending method according to claim 28, wherein said step of storing the history of services provided includes the step of storing the history of services provided to said user as history points obtained by adding up points prescribed for each kind of said services, and
the motion to be implemented in said client computer is determined according to said history points.

30. The virtual character sending method according to claim 28, wherein said motion is determined according to said history of services provided and is for displaying a questionnaire to a user in said client computer and for sending an answer input by said user back to said server computer.

31. A computer readable recording medium recording a program for implementation of a virtual character sending method in a server computer for sending a virtual character to a client computer through a network, the virtual character sending method comprising the steps of:
identifying a user using said client computer based on data received from said client computer;
providing said user with a service according to a request from said user;
storing a history of services provided to said user;
preparing data representing the virtual character changeable in figure based on said history of services provided; and
sending the data representing the virtual character having its figure changed based on the history of services provided to the user identified in said step of identifying the user, to the client computer used by said identified user.

32. The recording medium according to claim 31, wherein said step of storing the history of services provided includes the step of storing the history of services provided to said user as history points that are calculated by adding up points prescribed for each kind of said services, and said virtual character is changeable in figure based on said history points.

33. The recording medium according to claim 31, wherein said virtual character sending method further comprises the step of determining a data format with which said client computer is able to output, and
said step of sending the data representing the virtual character includes the step of transforming the data representing the virtual character having its figure changed based on the history of services provided to the user identified in said step of identifying the user to said data format determined in said step of determining the data format, to send to the client computer used by said identified user.

34. The recording medium according to claim 31, wherein
said step of providing the service includes the step of providing information to said user according to a request from said user,
said step of storing the history of services provided includes the step of storing the history of services provided to said user after classifying the services within the history into categories, and
said virtual character sending method further comprises the step of generating and storing preference information of said user based on said history with the services classified into the categories.

35. The recording medium according to claim 34, wherein said step of preparing the data representing the virtual character includes the step of preparing data including a plurality of virtual characters, said plurality of virtual characters being changeable in figures based on said history of services provided,
said virtual character sending method further comprises the step of selecting one of said plurality of virtual characters based on said user preference information, and
said step of sending the data representing the virtual character includes the step of sending the data representing the virtual character selected in said step of selecting one of the virtual characters having its figure changed based on the history of services provided to the user identified in said step of identifying the user, to the client computer used by said identified user.

36. The recording medium according to claim 34, wherein said virtual character sending method further comprises the steps of:
preparing data for implementation of a motion of said virtual character in the client computer, said motion being for displaying a questionnaire to a user at said client computer and for sending an answer to the questionnaire back to said server computer; and
selecting a user based on the preference information stored in said step of storing the preference information and a content of said questionnaire, and
said step of sending the data representing the virtual character includes the step, when the user selected in said step of selecting the user is the user identified in said step of identifying the user, of sending the data representing the virtual character having its figure changed based on the history of services provided to said selected user and the data for implementation of said motion prepared in said step of preparing the data for implementation of the motion, to the client computer used by said selected user.

37. The recording medium according to claim 34, wherein said virtual character sending method further comprises the steps of:
preparing data for implementation of a motion of said virtual character in the client computer, said motion being for prompting a user to access advertisement information; and
selecting a user based on the preference information stored in said step of storing the preference information and a content of said advertisement information, and
said step of sending the data representing the virtual character includes the step, when the user selected in said step of selecting the user is the user identified in said step of identifying the user, of sending the data representing the virtual character having its figure changed based on the history of services provided to said selected user and the data for implementation of said motion prepared in said step of preparing the data for implementation of the motion, to the client computer used by said selected user.

38. The recording medium according to claim 31, wherein said virtual character sending method further comprises the step of preparing data for implementation of a motion of said virtual character in the client computer, and
said step of sending the data representing the virtual character includes the step of sending the data representing the virtual character having its figure changed based on the history of services provided to the user identified in said step of identifying the user and the data for implementation of said motion prepared in said step of preparing the data for implementation of the motion, to the client computer used by said identified user.

39. The recording medium according to claim 38, wherein said step of storing the history of services provided includes the step of storing the history of services provided to said user as history points obtained by adding up points prescribed for each kind of said services, and
the motion to be implemented in said client computer is determined according to said history points.

40. The recording medium according to claim 38, wherein said motion is determined according to said history of services provided and is for displaying a questionnaire to a user in said client computer and for sending an answer input by said user back to said server computer.

41. A computer program comprising program code means adapted to perform all of the steps of the method of any of claims 21 to 30 when run on a computer.
